# EUROPEAN PATENT APPLICATION

(11) **EP 4 130 484 A1**
(43) Date of publication of application: **08.02.2023**
(21) Application number: 21782356.6
(22) Date of filing: 30.03.2021
(51) Int. Cl.: F04D 25/16, B60K 1/04, B60K 11/06, F04D 29/58

(54) **BLOWER DEVICE**

(30) Priority: 01.04.2020 JP 2020066121
(71) Applicant: TAIHO KOGYO CO., LTD., Toyota-shi Aichi 471-8502 (JP)
(72) Inventor: YAMASHITA, Masahiro, Toyota-shi, Aichi 471-8502 (JP); OHTAHARA, Kiyotaka, Toyota-shi, Aichi 471-8502 (JP)
(74) Representative: SSM Sandmair
(86) International application number: PCT/JP2021/013700
(87) International publication number: WO 2021/201039

(57) **Abstract**

Included are: a case; a motor provided in the case and having a rotatable shaft; two blowers provided in the case and including impellers that are fixed to a shaft and are capable of being rotated by the motor, the impellers each having multiple blades disposed at predetermined intervals on a circumference of the corresponding impeller; an intake port provided in the case and configured to take air in between the two blowers; and discharge ports provided in the case to each correspond to a one of the two blowers, each configured to discharge the air taken into a corresponding blower through the intake port to the outside. In each of portions that accommodates corresponding one of the two blowers in the case, a side opposite to a side through which air is taken in is sealed off so as to prevent inflow of air.

## Description

### Field

The present invention relates to a blowing device.

### Background

Conventionally, battery units of nickel-metal hydride batteries, lithium-ion batteries, or the like are installed as hybrid vehicle (HV) batteries or electric vehicle batteries in vehicles for example. The capacity of such a battery unit has been increased. In some cases, a battery unit can be composed of a plurality of batteries.

Batteries produce heat when used. Batteries having produced heat cannot be charged sufficiently, and may possibly fail to provide sufficient output. Vehicles are therefore equipped with, for example, a blowing device to blow air toward and thereby cool batteries. A blowing device blows air toward batteries by discharging air. In a case where a battery unit composed of a plurality of batteries as described above is installed, the blowing device cools the battery unit by discharging air toward individual batteries. In such a case, the blowing device desirably discharges air having the same temperature to all batteries because all the batteries need to be cooled to the same temperature in order for the battery unit to exhibit its characteristic performance.

### Citation List

### Patent Literature

Patent Literature 1: Japanese Patent Application Laid-open No. 2018-75948

### Summary

### Technical Problem

However, the blowing device in the patent document 1 has difficulty in cooling all batteries to the same temperature.

The present invention is directed to providing a blowing device capable of appropriately cooling an external device.

### Solution to Problem

An blowing device includes: a case; a motor provided in the case and having a rotatable shaft; two blowers provided in the case and including impellers that are fixed to a shaft and are capable of being rotated by the motor, the impellers each having multiple blades disposed at predetermined intervals on a circumference;
an intake port provided in the case and configured to take air in between the two blowers; and discharge ports provided in the case to each correspond to a one of the two blowers, and each configured to discharge the air taken into a corresponding blower through the intake port to the outside, wherein in each of portions that accommodates corresponding one of the two blowers in the case, a side opposite to a side through which air is taken in is sealed off so as to prevent inflow of air.

### Advantageous Effects of Invention

According to the present invention, an external device can be appropriately cooled.

### Brief Description of Drawings

FIG. 1 illustrates a blowing device according to an embodiment installed in a vehicle.
FIG. 2 is a perspective view illustrating the outer appearance of the blowing device.
FIG. 3 is a plan view illustrating the blowing device.
FIG. 4 is a side view illustrating the blowing device.
FIG. 5 is a sectional view illustrating an internal configuration of the blowing device.
FIG. 6 is a side sectional view illustrating the internal configuration of the blowing device.
FIG. 7 illustrates connection of the blowing device to the battery unit.
FIG. 8 illustrates connection of a blowing device in a second embodiment to a battery unit.

### Description of Embodiments

Each embodiment below describes a blowing device as an example that cools a battery unit installed in a vehicle. It is assumed that batteries are used in a vehicle such as a hybrid vehicle, an electric vehicle, or a fuel cell vehicle. The embodiments of the present invention are described below with reference to the drawings.

### First Embodiment

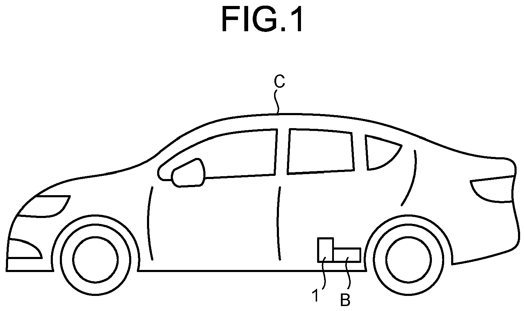

Firstly, a first embodiment is described. FIG. 1 illustrates a blowing device 1 and a battery unit B (an example of an external device), in the first embodiment, installed in a vehicle C. The battery unit B is installed, for example, under the rear seat of the vehicle C. The blowing device 1 is installed under the rear seat in the close vicinity of the battery unit B. The blowing device 1 takes in air from the cabin of the vehicle C and discharges the air toward the battery unit B. In the battery unit B, batteries are cooled with air discharged from the blowing device 1 and striking the battery unit B. The reason for configuring the blowing device 1 to take in air from the cabin of the vehicle C is that air inside a vehicle cabin is adjusted by an air conditioner to an appropriate temperature, and it is easy to take in air that has a temperature suitable for cooling the battery unit B, for example, even during the summer. In addition, air inside a vehicle cabin is purified and hence has low foreign particle and dust contents, thereby being less likely to clog a filter (not illustrated) provided in the blowing device 1. Alternatively, the blowing device 1 may be configured to take in air from outside the vehicle.

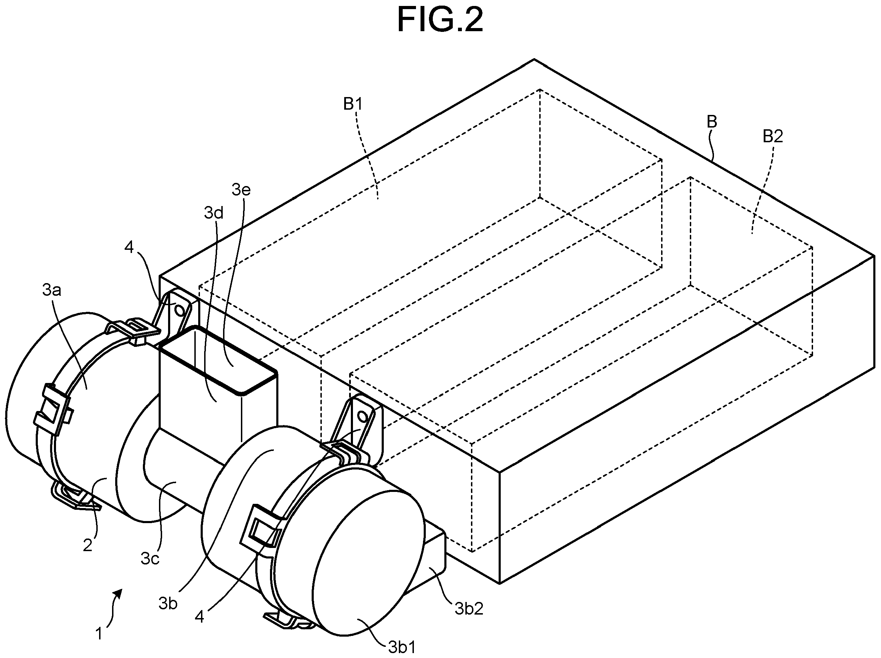

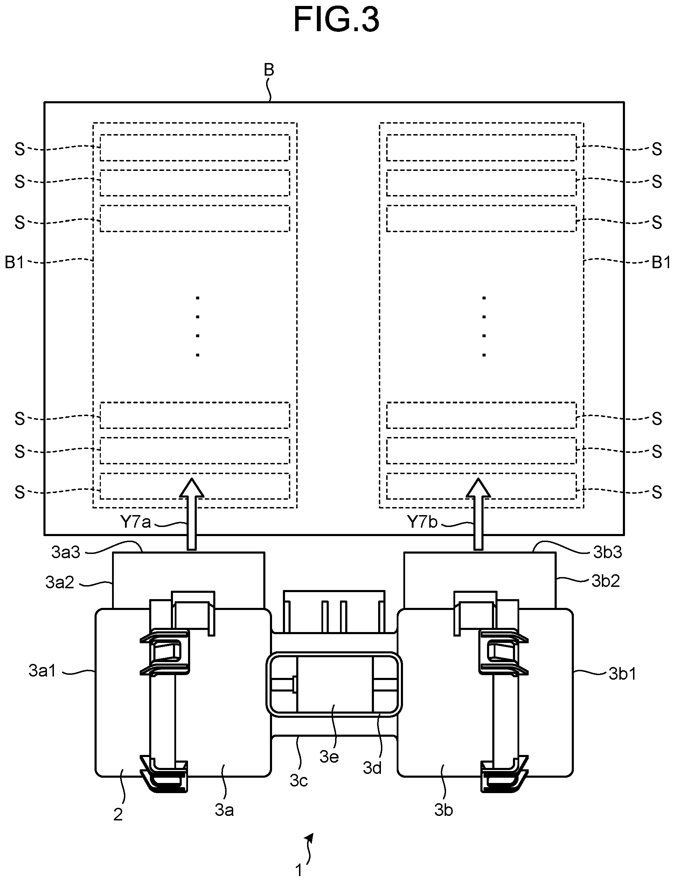

Next, the blowing device 1 is described. FIG. 2 is a perspective view illustrating the outer appearance of the blowing device 1. FIG. 3 is a plan view illustrating the blowing device 1. As illustrated in FIGS. 2 and 3, the blowing device 1 has a first blower 3a and a second blower 3b connected to both sides of a connection part 3c. The blowing device 1 also has an intake part 3d provided to the connection part 3c. The blowing device 1 also has a discharge part 3a2 provided in a position that faces the first blower 3a. The blowing device 1 has a discharge part 3b2 provided in a position that faces the second blower 3b. The first blower 3a, the discharge part 3a2, the second blower 3b, the discharge part 3b2, the connection part 3c, and the intake part 3d constitute a case 2 formed of, for example, resin or metal. The intake part 3d has an intake port 3e for taking in air. The discharge part 3a2 has a discharge port 3a3 that discharges air in the direction of the arrow Y7a. The discharge part 3b2 has a discharge port 3b3 that discharges air in the direction of the arrow Y7b. The case 2 is sealed off except for the intake port 3e and the discharge ports 3a3 and 3b3.

The blowing device 1 has a lateral side part 3a1 provided in a portion of the case 2, the portion covering a lateral side of the first blower 3a. The lateral side part 3a1 hermetically covers the first blower 3a and prevents air from flowing into the first blower 3a through the lateral side part 3a1 side. The blowing device 1 also has a lateral side part 3b1 provided in a portion of the case 2, the portion covering a lateral side of the second blower 3b. The lateral side part 3b1 hermetically covers the second blower 3b and prevents air from flowing into the second blower 3b through the lateral side part 3b1 side. That is, the blowing device 1 is capable of taking air into the case 2 through only the intake port 3e and is also capable of discharging air to the outside through only the discharge ports 3a3 and 3b3.

The blowing device 1 also has attachment parts 4 to attach the blowing device 1 directly or indirectly to the vehicle C.

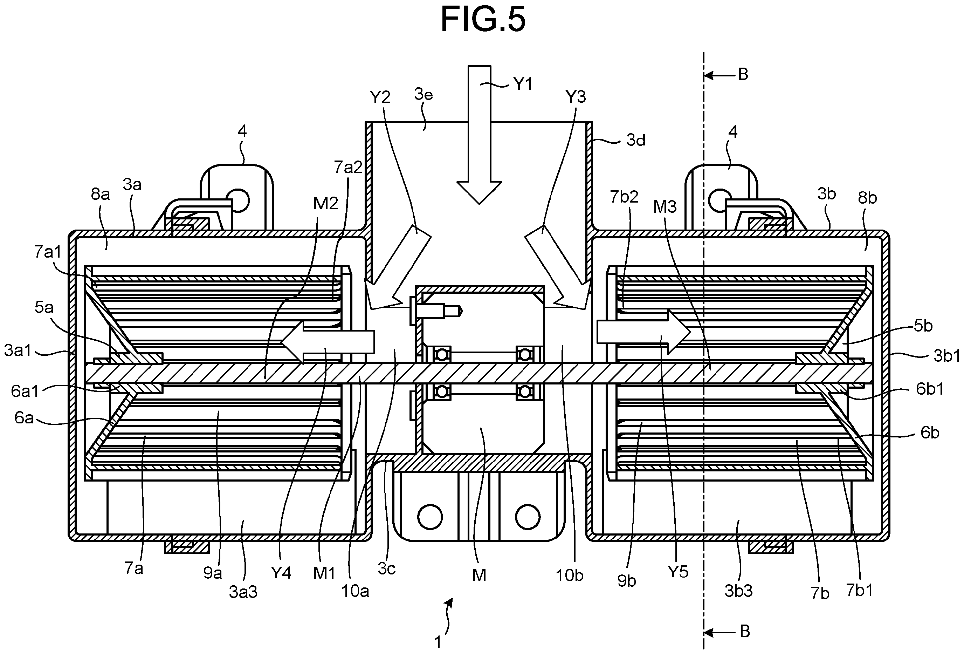

The first blower 3a has a cylindrical space 8a (see FIG. 5) in the corresponding portion of the case 2. The second blower 3b has a cylindrical space 8b (see FIG. 5) in the corresponding portion of the case 2. A motor M (see FIG. 5) is disposed in the connection part 3c located in the middle portion of the case 2. The intake part 3d takes air into the case 2 through the intake port 3e. The discharge part 3a2 discharges air from inside the case 2 to the outside through the discharge port 3a3. The discharge part 3b2 discharges air from inside the case 2 to the outside through the discharge port 3b3.

The battery unit B is disposed in the close vicinity of the blowing device 1. The battery unit B contains two batteries (batteries B1 and B2). The battery B1 and the battery B2 are each composed of a plurality of battery cells S aligned and connected in series. Air can flow between adjacent ones of the battery cells S. The battery cells S are cooled by air that flows between adjacent ones of the battery cells S.

The battery B1 is installed near the discharge part 3a2. The battery B1 is cooled with air discharged from the discharge part 3a2 and flowing between adjacent ones of the battery cells S. The battery B2 is installed near the discharge part 3b2. The battery B2 is cooled with air discharged from the discharge part 3b2 and flowing between adjacent ones of the battery cells S.

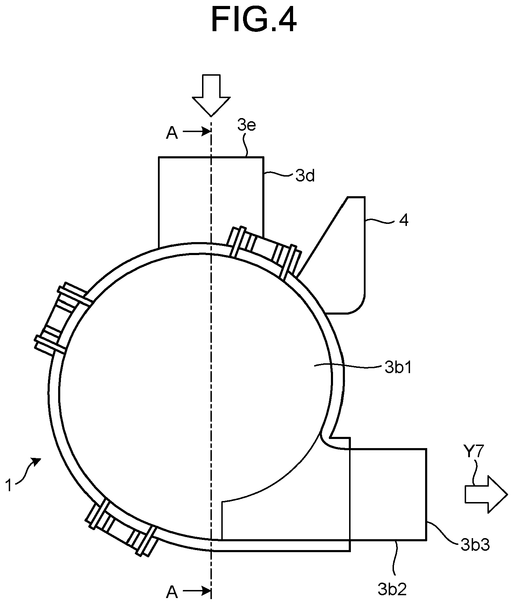

FIG. 4 illustrates a side view of the blowing device 1 as viewed from the second blower 3b side. As illustrated in FIG. 4, the intake part 3d and the intake port 3e are formed in an upper portion of the case 2. The intake part 3d takes air from above the blowing device 1 into the case 2 through the intake port 3e in the direction of the arrow Y1 (downward).

The discharge part 3b2 and the discharge port 3b3 are formed in a lower portion of the case 2 (the second blower 3b). The discharge part 3b2 discharges air from inside the second blower 3b through the discharge port 3b3 in the direction of the arrow Y7b (horizontally, to the right in FIG. 4). The intake part 3d and the discharge part 3b2 are formed in such a manner as to cross at a substantially right angle. Consequently, air taken in through the intake port 3e is discharged through the discharge port 3b3 in a direction substantially 90° different from a direction in which the air has been taken in.

Although not illustrated in FIG. 4, the discharge part 3a2 and the discharge port 3a3 are formed in a lower portion of the case 2 (the first blower 3a). The discharge part 3a2 discharges air from inside the first blower 3a in the direction of the arrow Y7a (horizontally) through the discharge port 3a3. The intake part 3d and the discharge part 3a2 are formed in such a manner as to cross at a substantially right angle. Consequently, air taken in through the intake port 3e is discharged through the discharge port 3a3 in a direction substantially 90° different from a direction in which the air has been taken in.

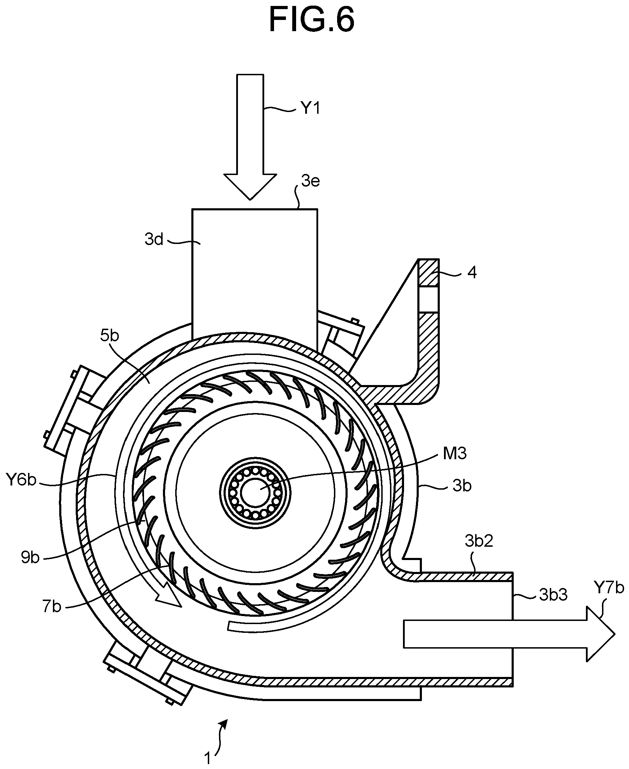

Next, the internal configuration of the blowing device 1 is described. FIG. 5 is a sectional view illustrating the internal configuration of the blowing device 1 by cutting and viewing the case 2 in FIG. 4 along the A-A line. FIG. 6 is a side sectional view illustrating the internal configuration of the blowing device 1 in FIG. 5 by cutting and viewing the blowing device 1 along the B-B line. As illustrated in FIG. 5, the blowing device 1 includes the connection part 3c in the middle portion of the case 2. In the connection part 3c, the motor M is fixedly disposed on the case 2.

The motor M has a relatively small cylindrical shape. In the motor M, a shaft M1 is fixed to a rotor, and the shaft M1 is rotated by the rotation of the rotor. The shaft M1 is a single shaft and includes a shaft M2 extending from the motor M in one direction and a shaft M3 extending from the motor M in a direction opposite to the direction in which the shaft M2 extends. That is, the shafts M2 and M3 extend from the motor M in opposite directions. The shafts M2 and M3 do not have to be made of the single shaft M1 and may be, for example, individual shafts extending in respective opposite directions from the motor M.

The blowing device 1 has the first blower 3a and the second blower 3b on both sides of the connection part 3c of the case 2. The first blower 3a is formed in a side on one side of the connection part 3c in the extending direction of the shaft M2. The first blower 3a has the cylindrical space 8a inside. The shaft M2 extends into the space 8a. The first blower 3a accommodates a substantially cylindrical impeller 7a in the space 8a. Multiple blades 9a are disposed in parallel at predetermined intervals on the circumference of the impeller 7a. These multiple blades 9a each have an elongated, substantially arced shape and are attached to the circumference of the impeller 7a along the direction of the shaft M2. Respective first ends 7a1 of the blades 9a are fixed to an end part 6a that has a substantially conical surface. Respective second ends 7a2 of the blades 9a are connected to one another. Of each of the blades 9a, the first end 7a1 means one side that is away from the motor M. Of each of the blades 9a, the second end 7a2 means another side that is close to the motor M. That is, the impeller 7a is fixed to the shaft M2 near the leading end of the shaft M2 in a location away from the motor M. The second ends 7a2 of the blades 9a are formed in such a manner as to be substantially flush with one another in a direction intersecting the shaft M2 at a right angle. The impeller 7a and the blades 9a are formed of resin or metal.

The end part 6a has a circular hole 6a1 in a central portion thereof. The shaft M2 is inserted through the hole 6a1, whereby the impeller 7a is fixed to the shaft M2. The second ends 7a2 of the blades 9a are not directly fixed to the shaft M2, whereby air inside the case 2 flows freely through the second end 7a2 side into the space 8a of the first blower 3a.

In addition, the blowing device 1 has a space 10a (a guide part) near a portion where the connection part 3c connects to the first blower 3a. The space 10a is a space formed between the motor M and the impeller 7a. A discharge port 3a3 is formed by the discharge part 3a2 in a lower portion of the first blower 3a.

The second blower 3b is formed in another side of the connection part 3c opposite to the first blower 3a in the extending direction of the shaft M3. The second blower 3b has the cylindrical space 8b inside. The shaft M3 extends into the space 8b. The second blower 3b accommodates a substantially cylindrical impeller 7b in the space 8b. Multiple blades 9b are disposed in parallel at predetermined intervals on the circumference of the impeller 7b. These multiple blades 9b each have an elongated, substantially arced shape and are attached to the circumference of the impeller 7b along the shaft M3. Respective first ends 7b1 of the blades 9b are fixed to the impeller 7b via an end part 6b that has a substantially conical surface. Respective second ends 7b2 of the blades 9b are connected to one another. Of each of the blades 9b, the first end 7b1 means one side that is away from the motor M. Of each of the blades 9b, the second end 7b2 means another side that is close to the motor M. That is, the impeller 7b is fixed to the shaft M3 near the leading end of the shaft M3 in a location away from the motor M. The second ends 7b2 of the blades 9b are formed in such a manner as to be substantially flush with one another in a direction intersecting the shaft M3 at a right angle. The impeller 7b and the blades 9b are formed of resin or metal.

The end part 6b has a circular hole 6b1 in a central portion thereof. The shaft M3 is inserted through the hole 6b1, whereby the impeller 7b is fixed to the shaft M3. The second ends 7b2 of the blades 9b are not directly fixed to the shaft M3, whereby air inside the case 2 flows freely through the second end 7b2 side into the space 8b of the second blower 3b.

The blowing device 1 also has a space 10b (a guide part) near a portion where the connection part 3c connects to the second blower 3b. The space 10b is a space formed between the motor M and the impeller 7b. A discharge port 3b3 is formed by the discharge part 3b2 in a lower portion of the second blower 3b. The spaces 10a and 10b function to distribute air, taken in through the intake port 3e, toward the shaft M2 and the shaft M3 and guide the air from the inside (the space 10a and the space 10b) to the first blower 3a and the second blower 3b. The intake port 3e takes outside air into the space 10a and the space 10b (between the two air blowers).

In the blowing device 1 thus configured, the motor M is disposed in the middle portion thereof, and the first blower 3a and the second blower 3b are disposed on both sides of the motor M in the direction of the shaft M1. The intake part 3d and the intake port 3e are provided in a portion intermediate between the first blower 3a and the second blower 3b in the case 2. In other words, the intake part 3d and the intake port 3e are provided near a position where the motor M is installed in the case 2 (near the motor M).

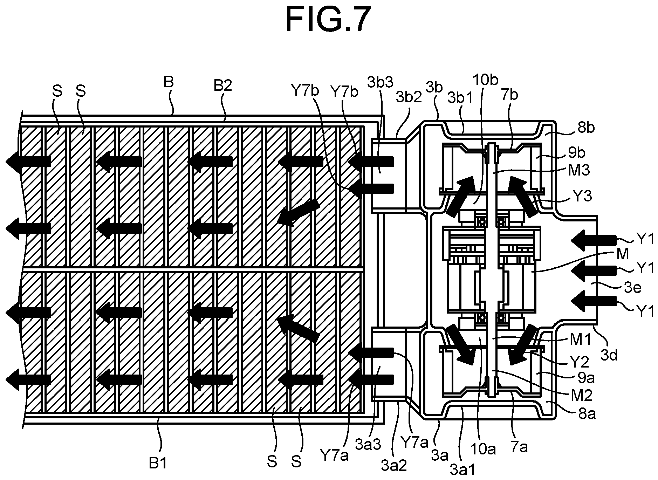

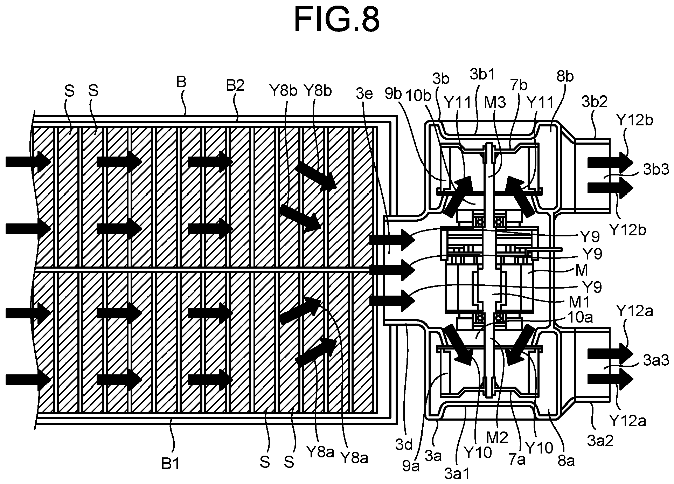

Next, airflows inside the blowing device 1 and in the battery unit B connected to the blowing device 1 are described using FIGS. 5 and 6 mentioned above and FIG. 7. For the sake of clarity, FIG. 7 illustrates air as being taken in through the intake port 3e (from right to left in FIG. 7) into the direction of the arrows Y1 and then discharged through the discharge port 3a3 in the direction of the arrows Y7a (from right to left in FIG. 7) and through the discharge port 3b3 in the direction of the arrows Y7b (from right to left in FIG. 7). Actually, however, directions along which air is taken in and discharged are substantially 90° different as illustrated in FIG. 6. The same applies to FIG. 8, which illustrates a second embodiment. Actually, directions along which air is taken in and discharged in FIG. 8 are substantially 90° different.

In the blowing device 1 thus configured, when the impellers 7a and 7b rotate as a result of the rotation of the motor M, airflow is generated individually in the first blower 3a and in the second blower 3b, whereby air is taken into the case 2 of the blowing device 1 through the intake port 3e in the direction of the arrows Y1. That is, because the intake port 3e opens in a direction that intersects the shaft M1, the blowing device 1 takes in air through the intake port 3e in a direction that intersects the shaft M1 of the motor M. In addition, the blowing device 1 is highly unlikely to take air into the case 2 of the blowing device 1 other than from the intake port 3e. The intake port 3e is the only opening that takes air into the interior of the case 2.

Air taken in through the intake port 3e is distributed into the directions of the arrows Y2 and the arrows Y3 when coming near the motor M, and continues to flow. The air that has flowed into the directions of the arrows Y2 is guided into the space 10a positioned between the first blower 3a and the second blower 3b. The air taken in into the directions of the arrows Y3 is guided into the space 10b. When air is guided into the space 10a and the space 10b, the air strikes the motor M and takes away heat produced by the motor M, thus cooling the motor M.

Furthermore, because air is taken into the case 2 through only the intake port 3e (only one part), the temperature of the air taken in into the directions of the arrows Y2 and the temperature of the air taken in into the directions of the arrows Y3 are substantially the same.

The space 10b guides the guided air into the second blower 3b. That is, the air guided into the space 10b is taken into the second blower 3b (i.e., into the space 8b) in the directions of the arrows Y5 (i.e., from the middle portion of the blowing device 1 toward the outside with respect to the shaft M3 in the direction thereof) by the action of airflow generated by the rotation of the impeller 7b. As illustrated in FIG. 6, the air taken into the second blower 3b is transported along the inner circumferential surface of the second blower 3b while rotating inside the space 8b in the direction of the arrow Y6b. The direction of the arrow Y6b is the same as a direction in which the impeller 7b rotates. The air rotating in the direction of the arrow Y6b is then discharged to the outside (in the direction of the arrow Y7b) through the discharge port 3b3 provided in the discharge part 3b2.

The air discharged to the outside through the discharge port 3b3 becomes blown air and is fed into the battery B2. The air discharged through the discharge port 3b3 passes, for example, under the battery B2, and then, between adjacent ones of the battery cells S, ascends and passes. The air thus passing strikes each of the battery cells S and takes away heat from each of the battery cells S. The battery B2 is thus cooled by air discharged through the discharge port 3b3.

Likewise, the space 10a guides the guided air into the first blower 3a. That is, the air guided into the space 10a is taken into the first blower 3a (i.e., into the space 8a) in the directions of the arrows Y4 (i.e., from the middle portion of the blowing device 1 toward the outside with respect to the shaft M2 in the direction thereof) by the action of airflow generated by the rotation of the impeller 7a. Although not illustrated, in the same manner as illustrated in FIG. 6, the air taken into the first blower 3a is transported along the inner circumferential surface of the first blower 3a while rotating in the same direction as that in which the impeller 7a rotates. The air rotating along the inner circumferential surface of the first blower 3a inside the space 8a is then discharged to the outside (in the direction of the arrow Y7a) through the discharge port 3a3 provided in the discharge part 3a2.

The air discharged to the outside through the discharge port 3a3 becomes blown air and is fed into battery B1. The air discharged through the discharge port 3a3 passes, for example, under the battery B1 and then ascends and passes between the battery cells S adjacent to each other. The air thus passing strikes each of the battery cells S and takes away heat from each of the battery cells S. The battery B1 is thus cooled by air discharged through the discharge port 3a3.

This configuration enables the temperature of air discharged to the outside through the discharge port 3a3 and the temperature of air discharged to the outside from the discharge port 3b3 to be substantially the same. This is because the temperature of air taken in into the directions of the arrows Y2 and the temperature of air taken in into the directions of the arrows Y3 are substantially the same. Therefore, the temperature of the blown air to cool the battery B1 and the temperature of the blown air to cool the battery B2 are substantially the same. Thus, the battery B1 and the battery B2 are cooled to substantially the same temperatures (the appropriate cooling of the battery unit B is enabled), whereby sufficient output can be obtained from the battery unit B.

### Second Embodiment

Next, a second embodiment is described. In the first embodiment, air discharged through the discharge port 3a3 in the discharge part 3a2 of the blowing device 1 and the discharge port 3b3 in the discharge part 3b2 thereof is blown to the battery unit B, thereby cooling the battery unit B. In contrast, in the second embodiment, air is taken into the intake port 3e provided in the intake part 3d, thereby generating airflow near the battery unit B and thus cooling the battery unit B. In the following description of the second embodiment, the same components as those in the first embodiment are assigned the same reference signs as those in the first embodiment, and descriptions thereof are simplified or omitted. In the second embodiment, the blowing device 1 has the same components as in the first embodiment.

FIG. 8 illustrates connection of the blowing device 1 in the second embodiment to the battery unit B. As illustrated in FIG. 8, the intake part 3d of the blowing device 1 is connected to or provided adjacent to the battery unit B. The intake part 3d is disposed in a position substantially equidistant from the batteries B1 and B2 (i.e., a position corresponding to a substantially central position of the battery unit B in the vertical direction in FIG. 8). When the impellers 7a and 7b rotate as a result of the rotation of the motor M, airflow is generated individually in the first blower 3a and in the second blower 3b, whereby air existing near the battery unit B (air warmed by the battery cells S) is taken into the case 2 of the blowing device 1 through the intake port 3e in the direction of the arrows Y9. Because the intake port 3e opens in a direction that intersects the shaft M1, the blowing device 1 takes in air through the intake port 3e in a direction that intersects the shaft M1 of the motor M. In addition, the blowing device 1 is highly unlikely to take air into the case 2 of the blowing device 1 other than from the intake port 3e. The intake port 3e is the only opening that takes air into the interior of the case 2.

Air taken in through the intake port 3e flows while being distributed, near the motor M, in directions indicated by the arrows Y10 and the arrows Y11. The air that has flowed into the directions of the arrows Y10 is guided into the space 10a, which is between the first blower 3a and the second blower 3b. The air taken in into the directions of arrows Y11 is guided into the space 10b, which is between the first blower 3a and the second blower 3b.

The space 10b guides, into the second blower 3b, the air taken in through the intake port 3e. That is, airflow generated by the rotation of the impeller 7b functions to take the air into the second blower 3b (i.e., into the space 8b) in the directions of the arrows Y11 (i.e., from the middle portion of the blowing device 1 toward the outside with respect to the shaft M3 in the direction thereof) after being guided into the space 10b. As illustrated in FIG. 6, the air taken into the second blower 3b is transported along the inner circumferential surface of the second blower 3b while rotating inside the space 8b in the direction of the arrow Y6b. The direction of the arrow Y6b is the same as a direction in which the impeller 7b rotates. The air rotating in the direction of the arrow Y6b is then discharged to the outside (in the direction of the arrow Y7b (the direction of the arrows Y12b in FIG. 8)) through the discharge port 3b3 provided in the discharge part 3b2. The air discharged to the outside through the discharge port 3b3 is exhausted to the outside. Because a lateral side of the second blower 3b is covered by the lateral side part 3b1, air taken in through the intake port 3e by the rotation of the impeller 7b and transported in the direction of the arrow Y6b does not leak out through the lateral side of the second blower 3b. In addition, no outside air is taken in through the lateral side of the second blower 3b.

Likewise, the space 10a guides the guided air into the first blower 3a. That is, airflow generated by the rotation of the impeller 7a functions to take the air into the first blower 3a (i.e., into the space 8a) in the directions of the arrows Y10 (i.e., from the middle portion of the blowing device 1 toward the outside with respect to the shaft M2 in the direction thereof) after being guided into the space 10a. Although not illustrated, in the same manner as illustrated in FIG. 6, the air taken into the first blower 3a is transported along the inner circumferential surface of the first blower 3a while rotating in the same direction as that in which the impeller 7a rotates. The air rotating along the inner circumferential surface of the first blower 3a inside the space 8a is then discharged to the outside (in the direction of the arrow Y7a (the direction of the arrows Y12a in FIG. 8)) through the discharge port 3a3 provided in the discharge part 3a2. The air discharged to the outside through the discharge port 3a3 is exhausted to the outside. Because a lateral side of the first blower 3a is covered by the lateral side part 3a1, air taken in through the intake port 3e by the rotation of the impeller 7a does not leak out through the lateral side of the first blower 3a. In addition, no outside air is taken in through the lateral side of the first blower 3a.

As described above, the blowing device 1 in the second embodiment takes in air through the intake port 3e and discharges, through only the discharge ports 3a3 and 3b3, the air thus taken in. As a result, the flow paths of air that flows inside the blowing device 1 are fixed. With the flow paths of air fixed, the amount of air that flows inside the blower 3a and the amount of air that flows inside the blower 3b are substantially equal. In the blowing device 1 with such air paths, the amount of air that is taken in through the intake port 3e is stable. Thus, the intake port 3e takes in air from the battery B1 and the battery B2 substantially equally by having the intake part 3d disposed in a position substantially equidistant from the battery B1 and the battery B2. Consequently, air warmed by the battery B1 and air warmed by the battery B2 are replaced by substantially equal amounts of outside air that has not been warmed. Thus, the battery B1 and the battery B2 are cooled to substantially the same temperatures thanks to outside air that has replaced inside air (the appropriate cooling of the battery unit B is enabled), whereby sufficient output can be obtained from the battery unit B.

As described above, the blowing device 1 in the first embodiment and the second embodiment includes: a case 2; a motor M provided in the case 2 and having a rotatable shaft; two blowers (3a, 3b) provided in the case 2 and including impellers (7a, 7b) fixed to shafts (M2, M3) and capable of being rotated by the motor M, the impellers (7a, 7b) having multiple blades (9a, 9b) disposed at predetermined intervals on the respective circumferences of the corresponding impellers (7a, 7b); an intake port 3e provided in the case 2 and configured to take air in between the two blowers (3a, 3b); and discharge ports (3a3, 3b3) provided in the case 2 in a manner corresponding to the respective two blowers (3a, 3b), the discharge ports (3a3, 3b3) being configured to discharge the air taken into the corresponding blowers (3a, 3b) through the intake port 3e to the outside. In each of the portions that accommodates corresponding one of the two blowers (3a, 3b) in the case 2, a side opposite to a side through which air is taken in is sealed off so as to prevent inflow of air.

The blowing device 1 in the first embodiment as described above takes in air from the intake port 3e positioned between the first blower 3a and the second blower 3b, and discharges the air from the discharge ports (3a3, 3b3). Air does not flow in from the lateral sides of the case 2. Therefore, it is easy to enable individual flows of blown air discharged from the blowing device 1 to have the same temperature. Thus, for example, when the blowing device 1 is used to cool the battery unit B in the first embodiment, the battery B1 and the battery B2 can be cooled to substantially the same temperatures.

The blowing device 1 in the second embodiment takes in air through the intake port 3e positioned between the first blower 3a and the second blower 3b, and discharges the air from the discharge ports (3a3, 3b3). Air does not flow out and in through the lateral sides of the case 2. Consequently, flow paths of air that flows inside the blowing device 1 are fixed, whereby the amount of air that is taken in through the intake port 3e is stable. Thus, the battery B1 and the battery B2 can be cooled to substantially the same temperatures by having the intake part 3d disposed in a position substantially equidistant from the battery B1 and the battery B2.

Furthermore, in the blowing device 1 in the first embodiment, the first blower 3a and the second blower 3b are disposed on opposite sides of the motor M, and the intake port 3e is disposed between the first blower 3a and the second blower 3b, and near the motor M. The blowing device 1 in this embodiment as described above takes in air through the intake port 3e and discharges the air from the discharge ports (3a3, 3b3). Therefore, it is easy to enable individual flows of blown air discharged from the blowing device 1 to have the same temperature. In addition, the motor M is easily cooled by the air taken in through the intake port 3e.

The embodiments of the present invention are described above. However, these embodiments and modifications are merely illustrative and are not intended to limit the scope of the invention. These novel embodiments and modifications can be implemented in various other forms; and various omissions, substitutions, and changes can be made thereto without departing from the gist of the invention. These novel embodiments and modifications, as well as such alterations, fall within the scope and gist of the invention, and also fall within the scope of the claimed invention and its equivalents.

For example, the blowing device 1 in the first embodiment and the second embodiment has the first blower 3a and the second blower 3b in positions on opposite sides of the motor M. However, this is not a limiting example. For example, the motor M, the first blower 3a, and the second blower 3b may be disposed in this order. In that case, the impeller 7a and the impeller 7b are fixed to the same shaft M1, and the intake part 3d and the intake port 3e are formed in a position between the first blower 3a and the second blower 3b in the case 2.

The blowing device 1 in the first embodiment and the second embodiment is described as being used to cool the battery unit B. However, this is not a limiting example. The blowing device 1 may be used to cool an external device other than the battery unit B. The blowing device 1 may also be used for purposes (such as retaining heat of or warming an object) other than cooling an object.

In the first embodiment and the second embodiment, the blowing device 1 is described as an example that is applied to the battery unit B installed in the vehicle C. However, the blowing device 1 may also be used for batteries not for the vehicle C, such as batteries installed in trains.

In the first embodiment and the second embodiment, the blowing device 1 has the single intake port 3e. However, this is not a limiting example. The intake ports 3e does not physically need to be the only one (may be a collection of two or more intake ports).

### Reference Signs List

- 1: BLOWING DEVICE
- 2: CASE
- 3a: FIRST BLOWER
- 3b: SECOND BLOWER
- 3c: CONNECTION PART
- 3d: INTAKE PART
- 3e: INTAKE PORT
- 4: ATTACHMENT PART
- 6a: END PART
- 6b: END PART
- 7a: IMPELLER
- 7b: IMPELLER
- 8a: SPACE
- 8b: SPACE
- 9a: BLADE
- 9b: BLADE
- M1: SHAFT
- M2: SHAFT
- M3: SHAFT
- 10a: SPACE
- 10b: SPACE
- 3a1: LATERAL SIDE PART
- 3a2: DISCHARGE PART
- 3a3: DISCHARGE PORT
- 3b1: LATERAL SIDE PART
- 3b2: DISCHARGE PART
- 3b3: DISCHARGE PORT
- 7a1: FIRST END
- 7a2: SECOND END
- 7b1: FIRST END
- 7b2: SECOND END
- B: BATTERY UNIT
- B1: BATTERY
- B2: BATTERY
- M: MOTOR

## Claims

1. A blowing device comprising:
a case;
a motor provided in the case and having a rotatable shaft;
two blowers provided in the case and including impellers that are fixed to a shaft and are capable of being rotated by the motor, the impellers each having multiple blades disposed at predetermined intervals on a circumference;
an intake port provided in the case and configured to take air in between the two blowers; and
discharge ports provided in the case to each correspond to a one of the two blowers, and each configured to discharge the air taken into a corresponding blower through the intake port to the outside, wherein
in each of portions that accommodates corresponding one of the two blowers in the case, a side opposite to a side through which air is taken in is sealed off so as to prevent inflow of air.

2. The blowing device according to claim 1, wherein
the motor is installed between the two blowers, and
the two impellers are provided on the shaft that extends on both sides of the motor.

3. The blowing device according to claim 2, wherein
the intake port is open in a direction intersecting the shaft, and
air is taken in through the intake port in the direction intersecting the shaft by rotation of the impellers.

4. The blowing device according to claim 3, wherein the blowers take in air that has been taken in between the two blowers by rotation of the impellers.

5. The blowing device according to any one of claims 2 to 4, wherein the motor is cooled by air taken in through the intake port.

6. The blowing device according to any one of claims 1 to 5, wherein batteries to be cooled are each placed near a corresponding one of the two discharge ports.

7. The blowing device according to any one of claims 1 to 5, wherein the intake port is placed equidistantly from two batteries to be cooled.
